# EUROPEAN PATENT SPECIFICATION

(11) **EP 3 196 355 B1**
(45) Date of publication and mention of the grant of the patent: **18.11.2020**
(21) Application number: 15828200.4
(22) Date of filing: 28.07.2015
(51) Int. Cl.: D07B 1/06, B60C 9/00

(54) **STEEL CORD FOR REINFORCING RUBBER ARTICLE**
STAHLSEIL ZUR VERSTÄRKUNG EINES GUMMIARTIKELS
CÂBLE MÉTALLIQUE POUR RENFORCEMENT D'ARTICLES EN CAOUTCHOUC

(30) Priority: 28.07.2014 JP 2014153031
(43) Date of publication of application: 26.07.2017
(73) Proprietor: Bridgestone Corporation, Tokyo 104-8340 (JP)
(72) Inventor: NOZAKI, Yusuke, Tokyo 104-8340 (JP)
(74) Representative: Oxley, Robin John George
(86) International application number: PCT/JP2015/071405
(87) International publication number: WO 2016/017653

(56) References cited:
- EP-A1- 2 952 627
- WO-A1-2014/129300
- JP-A- 2000 017 587
- JP-A- 2011 042 910
- JP-A- 2013 227 698
- JP-A- 2013 227 698
- JP-A- 2013 522 493
- US-A- 3 413 799
- US-A1- 2012 211 310

## Description

### TECHNICAL FIELD

The present invention relates to a steel cord for reinforcing a rubber article (hereinafter, also simply referred to as "cord"), and particularly to a steel cord for reinforcing a rubber article for use in reinforcing applications for rubber articles such as tires.

### BACKGROUND ART

For a rubber article such as a tire, a steel cord formed by twisting a plurality of steel filaments is widely used as a reinforcing material. In particular, since a tire used for a heavy duty vehicle such as a construction vehicle is used under heavy loading on rough terrain having sharp rises or drops or the like, a steel cord to be used as a reinforcing material is demanded to have a particularly high strength and resistance. For this reason, in such a large tire, a steel cord having a so-called multi-twisted structure, which is formed by twisting a plurality of strands formed by twisting a plurality of steel filaments, is employed.

As a prior art relating to a steel cord having a multi-twisted structure, for example, Patent Document 1 discloses a technique in which, in a steel cord for reinforcing a rubber article having a multi-twisted structure formed by twisting a plurality of strands having a layered-twisted structure in which a plurality of steel filaments are twisted, the ratio dc/ds of the diameter dc of an outermost layer sheath filament constituting an outermost layer sheath of a core strand to the diameter ds of an outermost layer sheath filament constituting an outermost layer sheath of a sheath strand is set to from 1.05 to 1.25 to prevent the occurrence of a preceding break of an outermost layer filament, thereby improving the cord strength.

Attention is drawn to the disclosures of JP 2013 227698 A and JP 2000 017587 A. JP 2013 227698 A discloses a steel cord for reinforcing a rubber article comprising one core strand having a two-layered layered-twisted structure formed by twisting a plurality of steel filaments; and a plurality of sheath strands having a layered-twisted structure formed by twisting a plurality of steel filaments, wherein the sheath strands are twisted around the core strand, wherein the number of the sheath strands is 7.

### RELATED ART DOCUMENT

### PATENT DOCUMENT

Patent Document 1: Japanese Unexamined Patent Application Publication No. 2009-299223 (Claims and the like)

### SUMMARY OF THE INVENTION

### PROBLEMS TO BE SOLVED BY THE INVENTION

For tires used in construction vehicles or the like, resistance to blunt or acute protrusions such as rocks, that is, cut resistance is also important. In order to increase the cut resistance in a cord having a multi-twisted structure, improvement of the resistance of a core strand to tightening of a sheath strand is considered, and a technique described in Patent Document 1 is also known.

However, under the demand for further improvement in the tire performance in recent years, realization of a tire whose cut resistance is further improved is also demanded. On the other hand, in recent years, there has been an increasing demand for weight reduction of tires in order to reduce loads on the environment. In order to reduce the weight of a tire, it is desirable to further improve the tire performance while avoiding an increase in the amount of steel.

Accordingly, an object of the present invention is to provide a steel cord for reinforcing a rubber article which can further improve cut resistance when applied to a tire while maintaining the amount of steel to be used.

### MEANS FOR SOLVING THE PROBLEMS

The present inventor intensively studied to find that the above-described problems can be solved by employing the following configuration, thereby completing the present invention.

That is, the steel cord for reinforcing a rubber article of a first aspect of the present invention is a steel cord as claimed in claim 1. In the cord of the first aspect of the present invention, preferably, all filaments constituting the core strand have the same diameter. Further, in the cord of the first aspect of the present invention, preferably, a cord diameter is equal to or more than 5.00 mm.

A pneumatic tire of a second aspect of the present invention comprises a reinforcing material, wherein said reinforcing material comprises the steel cord for reinforcing a rubber article of the first aspect of the present invention.

### EFFECTS OF THE INVENTION

According to the present invention, it becomes possible to realize a steel cord for reinforcing a rubber article which can further improve cut resistance when applied to a tire while maintaining the amount of steel to be used.

### BRIEF DESCRIPTION OF THE DRAWING

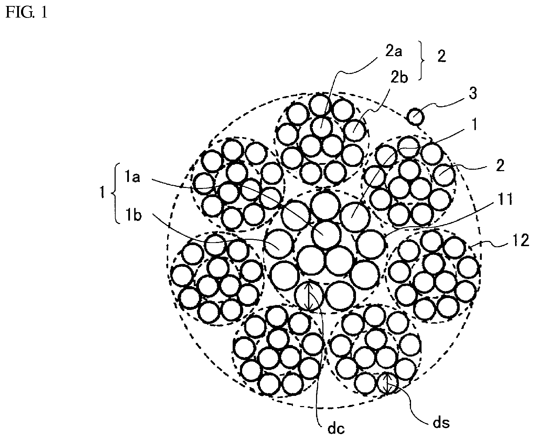

FIG. 1 is a cross-sectional view in the width direction illustrating one configuration example of a steel cord for reinforcing a rubber article of the present invention.

### MODE FOR CARRYING OUT THE INVENTION

Hereinafter, embodiments of the present invention will be described in detail with reference to the drawing.

FIG. 1 is a cross-sectional view in the width direction illustrating one configuration example of a steel cord for reinforcing a rubber article of the present invention. As illustrated in the drawing, the cord of the present invention comprises: one core strand 11 having a two-layered layered-twisted structure formed by twisting a plurality of steel filaments 1; and a plurality of (in the illustrated example, seven) sheath strands 12 each having two-layered layered-twisted structure formed by twisting a plurality of steel filaments 2, and has a multi-twisted structure formed by twisting the sheath strands 12 around the core strand 11. In the illustrated cord, the core strand 11 has a 3+9 structure in which a sheath is formed by twisting nine sheath filaments 1b around a core composed of twisted three core filaments 1a, and the sheath strand 12 has a 3+9 structure in which a sheath is formed by twisting nine sheath filaments 2b around a core composed of twisted three core filaments 2a. In the illustrated cord, a spiral filament 3 is spirally wound around the outer periphery of the sheath strand 12.

In the present invention, it is important that the ratio dc/ds of the diameter dc of the sheath filament 1b constituting the sheath of the core strand 11 to the diameter ds of the outermost layer sheath filament 2b constituting the outermost layer sheath of the sheath strand 12 is within the range of from 1.27 to 1.42 In order to improve the cut resistance of a cord, it is effective to further increase the thickness of the outermost layer filament of the core strand. However, when the core strand has three layers, the cord diameter becomes thick, the amount of steel increases, which contradicts a demand for weight reduction. For this reason, in the present invention, the value of the ratio dc/ds has been defined while limiting the core strand 11 to a two-layered layered-twisted structure. By setting the value of the ratio dc/ds to be in the specified range, the shear stress between filaments acting between a core strand and a sheath strand is relaxed. By this, the core strand 11 can have strength sufficient to endure the tightening force of the sheath strand 12. As a result, by improving the shear resistance of the cord itself, the cut resistance of the cord can be improved. Patent Document 1 specifies the ratio dc/ds within the range of 1.05 to 1.25, and describes that, when the ratio dc/ds exceeds 1.25 and becomes a large value, preceding break of filaments occurs between the core strand and the sheath strand.

In the cord of the present invention, the number of layers of the layered-twisted structure of the sheath strand 12 is not particularly limited, and may be, for example, from 2 to 3. In this case, assuming that a first sheath and a second sheath are sequentially formed from the inner layer of the layered-twisted structure, when the sheath strand 12 has a two-layered layered-twisted structure, the outermost layer sheath of the sheath strand 12 is the first sheath, and when the sheath strand 12 has a three-layered layered-twisted structure, the outermost layer sheath of the sheath strand 12 is the second sheath.

In the cord of the present invention, the number of the sheath strand 12 is from 7 to 9. When all the core strand and sheath strands have the same diameter and the sheath strands are close-packed without a gap therebetween, six sheath strands can be arranged. However, as illustrated in the drawing, in the present invention, since the diameter of the sheath strand 12 is smaller than that of the core strand 11, seven to nine sheath strands 12 can be arranged. Accordingly, by setting the number of the sheath strands 12 to from 7 to 9, it is possible to further improve the resistance of the core strand to the tightening force of the sheath strand, and to further improve the cut resistance of the cord.

In the cord of the present invention, as illustrated in the drawing, it is preferable that all the filaments 1 constituting the core strand 11 have the same diameter. Although it is possible to improve the shear resistance by making the diameter of the core filament 1a smaller than the diameter of the sheath filament 1b in the core strand 11, when the core strand 11 has a two-layered layered-twisted structure as in the present invention, the diameter of the core filament 1a of the core strand 11 is preferably set to the same diameter as that of the sheath filament core 1b. This makes it easier to secure a space for arranging the sheath filament 1b in the core strand 11.

Further, the cord diameter of the cord of the present invention is preferably 5.00 mm or more, for example, from 5.00 to 6.00 mm. By using a cord having a diameter of 5.00 mm or more, it is possible to secure both strength and cut resistance required, particularly for large tires used for heavy duty vehicles such as construction vehicles.

In the cord of the present invention, the wire diameter and tensile strength of the filament to be used, the twisting direction, the twisting pitch, and the like of the filament or strand are not particularly limited, and can be appropriately selected according to the ordinary method as desired. For example, as the filament, a so-called high tensile strength steel having a carbon content of 0.80% by mass or more can be used. The cord of the present invention may or may not include a spiral filament.

Since the cord of the present invention is excellent in cut resistance, it is particularly suitable for a reinforcing material of large tires used for heavy duty vehicles such as construction vehicles, among others, ultra-large off-road radial tires having a tire size of about 40.00 R57. Such a large tire usually comprises: one or more carcasses composed of plies of steel cords extending in the radial direction between a pair of bead cores; at least four belt-crossing layers arranged radially outside the crown portion of the crown portion; and a tread disposed outside in the tire radial direction. The cord of the present invention can be used, for example, as a reinforcing cord for a belt crossing layer in such a tire.

### EXAMPLES

Hereinafter, the present invention will be described in more detail by way of examples.

As shown in the following Tables, the ratio dc/ds of the diameter dc of the sheath filament constituting the outermost layer sheath of the core strand to the diameter ds of the sheath filament constituting the outermost layer sheath of the sheath strand was changed by changing the cord structure, to prepare steel cords for reinforcing a rubber article of Examples and Comparative Examples in which a plurality of sheath strands having a layered-twisted structure were twisted around one core strand having a layered-twisted structure. The results of the following evaluations for the obtained cords are also shown in the following Tables.

### (Shear Resistance)

For each of the obtained cords, shear fracture resistance was evaluated using a Charpy impact tester. The results were indexed with the cord of Comparative Example 1 taken as 100. The larger the numerical value is, the more excellent the shear resistance is, which is favorable.

### (Steel Amount)

The amount of steel per unit length of each of the obtained cord was measured and indexed with the cord of Comparative Example 1 taken as 100. The smaller the numerical value is, the less the amount of steel is, which is excellent in light weight.

Shear resistance (index) /steel amount ratio (index) was calculated from the viewpoint of evaluation of the balance between shear resistance and light weight, and the calculated value was indexed with the value of Comparative Example 1 taken as 100. It can be said that the larger the numerical value is, the better the shear resistance and the light weight are provided in a well-balanced manner. Example 5 does not fall within the scope of the claimed invention, but is suitable for understanding the same.

**[Table 1]**

| | | Comparative Example 1 | Comparative Example 2 | Comparative Example 3 | Comparative Example 4 | Comparative Example 5 |
|---|---|---|---|---|---|---|
| Cord structure | | 1+7 | 1+7 | 1+7 | 1+6 | 1+7 |
| Core strand | Structure | 3+8+10 | 3+8+10 | 3+8+10 | 3+7+13 | 3+8 |
| | Core filament diameter (mm) | 0.320 | 0.310 | 0.330 | 0.240 | 0.565 |
| | First sheath filament diameter (mm) | 0.320 | 0.310 | 0.330 | 0.340 | 0.565 |
| | Second sheath filament diameter (mm) | 0.455 | 0.455 | 0.475 | 0.340 | - |
| Sheath strand | Structure | 3+8 | 3+8 | 3+8 | 3+9+12 | 3+8 |
| | Core filament diameter (mm) | 0.385 | 0.390 | 0.385 | 0.240 | 0.375 |
| | First sheath filament diameter (mm) | 0.385 | 0.390 | 0.385 | 0.240 | 0.375 |
| | Second sheath filament diameter (mm) | - | - | - | 0.340 | - |
| Cord | Cord diameter (mm) | 5.44 | 5.44 | 5.52 | 5.23 | 5.46 |
| Ratio dc/ds | | 1.18 | 1.17 | 1.23 | 1.00 | 1.51 |
| Shear resistance (index) | | 100 | 102 | 99 | 96 | 99 |
| Steel amount (index) | | 100 | 102 | 100 | 102 | 99 |
| Shear resistance/ steel amount ratio (index) | | 100 | 100 | 99 | 94 | 100 |

**[Table 2]**

| | | Example 1 | Example 2 | Example 3 | Example 4 | Example 5 | Example 6 |
|---|---|---|---|---|---|---|---|
| Cord structure | | 1+7 | 1+7 | 1+7 | 1+8 | 1+8 | 1+9 |
| Core strand | Structure | 3+8 | 3+8 | 3+8 | 3+8 | 3+8 | 3+8 |
| | Core filament diameter (mm) | 0.510 | 0.520 | 0.540 | 0.540 | 0.540 | 0.540 |
| | First sheath filament diameter (mm) | 0.510 | 0.520 | 0.540 | 0.540 | 0.540 | 0.540 |
| | Second sheath filament diameter (mm) | - | - | - | - | - | - |
| Sheath strand | Structure | 3+8 | 3+8 | 3+8 | 3+8 | 3+8 | 1+6 |
| | Core filament diameter (mm) | 0.380 | 0.395 | 0.385 | 0.290 | 0.300 | 0.385 |
| | First sheath filament diameter (mm) | 0.400 | 0.395 | 0.385 | 0.380 | 0.370 | 0.385 |
| | Second sheath filament diameter (mm) | - | - | - | - | - | - |
| Cord | Cord diameter (mm) | 5.36 | 5.44 | 5.44 | 5.01 | 5.02 | 4.55 |
| Ratio dc/ds | | 1.28 | 1.32 | 1.40 | 1.42 | 1.46 | 1.40 |
| Shear resistance (index) | | 109 | 112 | 108 | 104 | 100 | 87 |
| Steel amount (index) | | 101 | 102 | 100 | 98 | 96 | 85 |
| Shear resistance/ steel amount ratio (index) | | 108 | 110 | 108 | 106 | 104 | 102 |

As can be seen from the results in the above Tables, in each of the cords of the Examples in which a plurality of sheath strands having a layered-twisted structure were twisted around one core strand having a two-layered layered-twisted structure, and the value of the ratio dc/ds satisfied a predetermined range, it is obvious that the shear resistance was improved while suppressing an increase in the amount of steel.

### DESCRIPTION OF SYMBOLS

- 1, 2: Steel filament
- 1a, 2a: Core filament
- 1b, 2b: Sheath filament
- 3: Spiral filament
- 11: Core strand
- 12: Sheath strand

## Claims

1. A steel cord for reinforcing a rubber article comprising: one core strand (11) having a two-layered layered-twisted structure formed by twisting a plurality of steel filaments (1); and a plurality of sheath strands (12) having a layered-twisted structure formed by twisting a plurality of steel filaments (2), wherein the sheath strands (12) are twisted around the core strand (11),
wherein a ratio dc/ds of a diameter dc of a sheath filament (1b) constituting the sheath of the core strand (11) to a diameter ds of an outermost layer sheath filament (2b) constituting the outermost layer sheath of the sheath strand (12) is within the range of from 1.27 to 1.42, and
wherein the number of the sheath strands (12) is from 7 to 9.

2. The steel cord for reinforcing a rubber article according to claim 1, wherein
all filaments (1) constituting the core strand (11) have the same diameter.

3. The steel cord for reinforcing a rubber article according to claim 1, wherein
a cord diameter is equal to or more than 5.00 mm.

4. A pneumatic tire comprising a reinforcing material, wherein said reinforcing material comprises the steel cord for reinforcing a rubber article according to claim 1.

## Patentansprüche

1. Stahlkord zum Verstärken eines Gummiartikels, umfassend: einen Kernstrang (11), der eine zweilagige lagenverdrillte Struktur aufweist, die durch Verdrillen von mehreren Stahlfäden (1) geformt ist, und mehrere Mantelstränge (12), die eine lagenverdrillte Struktur aufweisen, die durch Verdrillen von mehreren Stahlfäden (2) geformt ist, wobei die Mantelstränge (12) um den Kernstrang (11) verdrillt sind,
wobei ein Verhältnis dc/ds eines Durchmessers dc eines Mantelstrangs (1b), der den Mantel des Kernstrangs (11) ausmacht, zu einem Durchmesser ds eines äußersten Lagenmantelfadens (2b) der den äußersten Lagenmantel des Mantelstrangs (12) ausmacht, innerhalb des Bereichs von 1,27 bis 1,42 liegt und
wobei die Anzahl der Mantelstränge (12) von 7 bis 9 beträgt.

2. Stahlkord zum Verstärken eines Gummiartikels nach Anspruch 1, wobei alle Fäden (1), die den Kernstrang (11) ausmachen, den gleichen Durchmesser aufweisen.

3. Stahlkord zum Verstärken eines Gummiartikels nach Anspruch 1, wobei ein Korddurchmesser gleich 5,00 mm oder größer ist.

4. Luftreifen, der ein Verstärkungsmaterial umfasst, wobei das Verstärkungsmaterial den Stahlkord zum Verstärken eines Gummiartikels nach Anspruch 1 umfasst.

## Revendications

1. Câblé en acier pour renforcer un article en caoutchouc, comprenant : un toron d'âme (11) ayant une structure à deux couches à torsion de couches formée par torsion de plusieurs filaments d'acier (1) ; et plusieurs torons de gaine (12) ayant une structure à torsion de couches formée par torsion de plusieurs filaments d'acier (2), dans lequel les torons d'acier (12) sont tordus autour du toron d'âme (11) ;
dans lequel un rapport de/ds entre un diamètre dc d'un filament de gaine (1b), constituant la gaine du toron d'âme (11), et un diamètre ds d'un filament de gaine d'une couche la plus externe (2b), constituant la gaine de la couche la plus externe du toron de gaine (12), est compris dans l'intervalle allant de 1,27 à 1,42 ; et
dans lequel le nombre de torons de gaine (12) est compris entre 7 et 9.

2. Câblé en acier pour renforcer un article en caoutchouc selon la revendication 1, dans lequel tous les filaments (1) constituant le toron d'âme (11) ont le même diamètre.

3. Câblé en acier pour renforcer un article en caoutchouc selon la revendication 1, dans lequel un diamètre de câblé est égal ou supérieur à 5,00 mm.

4. Bandage pneumatique comprenant un matériau de renforcement, dans lequel ledit matériau de renforcement comprend un câblé d'acier pour renforcer un article en caoutchouc selon la revendication 1.
